# EUROPEAN PATENT SPECIFICATION

(11) **EP 4 464 298 B1**
(45) Date of publication and mention of the grant of the patent: **18.11.2026**
(21) Application number: 23842458.4
(22) Date of filing: 28.07.2023
(51) Int. Cl.: A61H 23/02, F02B 75/04

(54) **STEPLESS AMPLITUDE-CHANGE RECIPROCATING DRIVE MECHANISM AND FASCIA GUN**
STUFENLOSER AMPLITUDENÄNDERUNGSHUBANTRIEBSMECHANISMUS UND FASZIENPISTOLE
MÉCANISME D'ENTRAÎNEMENT À MOUVEMENT ALTERNATIF À CHANGEMENT D'AMPLITUDE À VARIATION CONTINUE ET PISTOLET À FASCIA

(30) Priority: 22.03.2023 CN 202310288298
(43) Date of publication of application: 20.11.2024
(73) Proprietor: Sichuan Qianli-Beoka Medical Technology Inc., Chengdu, Sichuan 610052 (CN)
(72) Inventor: LEI, Changlong, Chengdu, Sichuan 610052 (CN); ZHANG, Wen, Chengdu, Sichuan 610052 (CN)
(74) Representative: Gulde & Partner
(86) International application number: PCT/CN2023/109742
(87) International publication number: WO 2024/017396

(56) References cited:
- CN-A- 111 904 831
- CN-A- 114 041 989
- CN-A- 114 041 989
- CN-A- 115 388 139
- CN-A- 116 155 027
- CN-B- 105 392 978
- CN-U- 217 697 261
- DE-A1- 102009 000 772
- DE-A1- 102009 000 772
- JP-A- 2005 207 390
- US-A1- 2013 012 849
- US-B1- 11 478 400

## Description

### TECHNICAL FIELD

The invention relates to the field of fascia guns, and in particular, to a reciprocating drive mechanism of continuously variable amplitude and a fascia gun with the same.

### BACKGROUND

A fascia gun, also known as a deep muscle fascia impactor, is a soft tissue massage tool that is used to relax the soft tissue of the human body through high-frequency impact. Existing fascia guns drive massage heads to perform linear reciprocating motion through pistons, the massage heads contact with the human body to generate high-frequency vibration acting on the deep muscles, so as to reduce local tissue tension, relieve pain and promote blood circulation. The existing fascia guns have achieved the function of the amplitude adjustment of the massage head, by which users can choose the appropriate amplitude depth of the fascia gun for massage physiotherapy according to their own situations. For example, professional athletes need to use fascia guns with deep amplitude depth to relieve post-exercise muscles. Ordinary consumers, especially novices, need to use fascia guns with shallow amplitude depth at the beginning, and then gradually use those with deep amplitude depth as needed.

In the existing fascia guns with adjustable amplitude depth, the adjustment principle thereof is to design a mechanism that can directly adjust the eccentric distance, and then adjust the distance between the output shaft of the motor and the output shaft of the eccentric wheel, so as to adjust the vibration amplitude of the piston. Patent application CN115444733Ais taken as an example, this solution relates to the field of massage devices, and in particular, to a fascia gun with variable amplitude, where the amplitude of the fascia gun can be achieved by switching the forward and reverse rotation states of a motor. The fascia gun includes the motor, an eccentric distance adjusting member with an eccentric shaft, a connecting rod and a piston rod, one end of the connecting rod is rotatably connected with the eccentric shaft, and the other end of the connecting rod is rotatably connected with the piston rod; the eccentric distance adjusting member includes a sliding skew block and an eccentric slider structure with the eccentric shaft, and the output shaft of the motor is in threaded transmission connection with the sliding skew block, and the sliding skew block slides onto the eccentric slider structure under the drive of the motor and pushes the eccentric slider structure to move in a direction perpendicular to the output shaft of the motor. In this solution, the eccentric distance is directly adjusted by changing the position of the sliding skew block, so as to adjust the amplitude of the piston. The eccentric distance needs to be directly adjusted by such an adjustment method, the structure is relatively complex, and the stability cannot be ensured after the amplitude is adjusted.

Conventional devices are disclosed in US 11478400 B1 and CN 114041989 A.

CN 114041989 A discloses a variable-amplitude fascia gun comprising a housing and a driving mechanism arranged in the housing; the driving mechanism comprises a motor, an eccentric wheel assembly, a transmission arm and a piston rod, wherein the motor is for driving the eccentric wheel assembly to rotate, and the transmission arm is hinged with an eccentric shaft of the eccentric wheel assembly and with the tail of the piston rod, so that the piston rod is moved in a reciprocating manner. The eccentric wheel assembly comprises an eccentric wheel body, a bearing and a rotating shaft, wherein the eccentric wheel body is installed on the output end of the motor, the rotating shaft comprises an eccentric shaft, a lower mounting post and a guide post, and the guide post is movable in a rotating fixed arc groove such that the eccentric distance between the eccentric shaft and the rotating centre of the eccentric wheel body is switchable between e1 and e2, wherein e2≠e1. The motor is fixed to the housing by a motor fixing bracket and the piston rod is movably connected to the housing through a sliding sleeve.

### SUMMARY OF THE INVENTION

The present invention is set out in the appended set of claims.

A technical problem to be solved by the invention is to provide a reciprocating drive mechanism of continuously variable amplitude with a simple and reliable structure, and a fascia gun with the same.

The technical solution adopted by the invention to solve the technical problems is that: a reciprocating drive mechanism of continuously variable amplitude comprises a slider-crank mechanism composed of a crank, an output rod, a connecting rod and a slider that are hinged in sequence, and a swing adjusting mechanism, where a hinge point between the output rod and the connecting rod is a swing hinge point, and the swing adjusting mechanism is configured to adjust and define the swinging range of the swing hinge point. When the mechanism actually moves, the output rod swings back and forth with the rotation of the crank, and the output rod drives the connecting rod and then drives the slider to move back and forth. In this case, if the reciprocating swinging amplitude and swinging range of the hinge point (namely, the swing hinge point) between the output rod and the connecting rod is adjusted, and then defined the reciprocating swing amplitude and swing range of the swing hinge point after adjustment, a new reciprocating amplitude of the slider will be obtained, so as to adjust the amplitude of the slider. In this solution, the reciprocating amplitude of the slider is continuously adjusted through such simple and ingenious structural design. Compared with existing continuous adjustment methods, such continuous adjustment effectively can reduce the structural complexity and manufacturing cost, and help the users to perform adjustment.

As a preferred structural form of the swing adjusting mechanism, the following solution is preferred: the swing adjusting mechanism includes an adjusting rod with a swinging end and an adjusting end; the swinging end of the adjusting rod is hinged on the output rod, and the hinged position of the adjusting end of the adjusting rod is adjustable. In actual use, since the swinging end of the adjusting rod is rotatably connected to the output rod, the adjusting rod moves with the swing of the output rod. When the amplitude of the slider needs to be adjusted, the rotating connection position of the adjusting end of the adjusting rod is adjusted to change the swinging range of the swing hinge point, and the amplitude of the slider is adjusted accordingly. This solution features in simple structural design, but effectively achieves the adjustment effect of the amplitude of the slider.

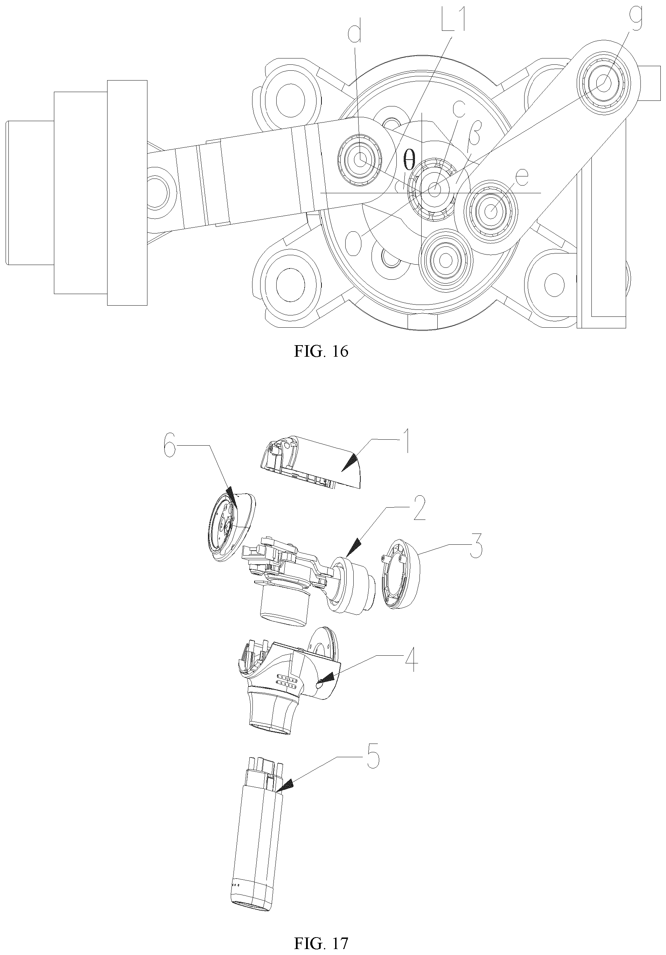

In practical application, the above structure can be selected as the following specific structural form: the crank is an eccentric wheel, the connecting rod is a swinging arm, and the slider is a piston, a connecting line between the rotating connecting end of the output rod and the swinging arm and the rotating input end of the eccentric wheel is a first cycloid, and a connecting line between the adjusting end of the adjusting rod and the rotating input end of the eccentric wheel is a second cycloid; an included angle between the first cycloid and the reciprocating axis of the piston is a first included angle θ, and an included angle between the second cycloid and the reciprocating axis of the piston is a second included angle β; and the second included angle β is adjusted so that the swinging range of the first included angle θ is adjusted in linkage. The second included angle β is adjusted to change the swing trajectory of the output rod, which will inevitably lead to the change in the swinging range of the swing hinge point of the output rod and further achieves the adjustment of piston amplitude. The first cycloid is corresponding to a connecting line od in FIG. 16, the second cycloid is corresponding to a connecting line og in FIG. 16, and a horizontal line in FIG. 16 is a piston reciprocating axis. In the above structure, the reciprocating amplitude of the piston satisfies the following relationship: F=L1 * |Cosθmax-Cosθmin|; where F represents the reciprocating amplitude of the piston; L1 represents the length of the first cycloid; θmax represents the maximum swing angle of the first cycloid with respect to the second included angle β; and θmin represents the minimum swing angle of the first cycloid with respect to the second included angle β. Preferably, the second included angle β ranges from -20° to 30°, and the swing angle of the first included angle θ ranges from -20° to 90°. In order to prevent rotation failure due to jamming, the value of θ does not include 90°. The linkage change of the swinging range of the first included angle θ, caused by adjusting the second included angle β, can be accurately calculated through the above structure, and then the reciprocating amplitude can be calculated. This provides a structural basis for the implementation of the reciprocating drive mechanism of continuously variable amplitude to specific products, so that the continuous adjustment process of the amplitude can be accurately controlled.

In order to simplify the structure and achieve smooth transmission, the invention can adopt the following solution that: includes an output hinge point between the output rod and the crank, an adjusting hinge point between the output rod and the swinging end of the adjusting rod, and a projection plane perpendicular to the rotating input end of the eccentric wheel, where the output hinge point, the adjusting hinge point and the swing hinge point are all projected onto the projection plane to obtain corresponding projection points, and the included angle of the connecting lines between any two projection points ranges from 0° to 360°. In actual design, the shape of the output rod is diversified. The structure of the output rod, defined by the above projection relationship, can be a rod extending along a straight line, a bent rod, a disk or the like. In addition to a planar structure, a three-dimensional structure with a convex or concave structure at any hinge point can also be used as the output rod when the above projection relationship is satisfied. Meanwhile, the adjusting hinge point between the output rod and the swinging end of the adjusting rod can also extend in two opposite directions from the swing hinge point. However, regardless of any specific shape, as long as the included angle of the connecting lines between the projections of any two hinge points is within the range of 0°-360°, the formed motion mechanism can be ensured to achieve the corresponding swing action and the transmission of the reciprocating action, and adjust the reciprocating amplitude. The included angle of the connecting lines does not include two endpoint values of 0° and 360°.

In order to adjust the position of the adjusting end of the adjusting rod in real time, a position adjusting mechanism can be selected, the adjusting end of the adjusting rod is hinged on the position adjusting mechanism, and the position adjusting mechanism drives the adjusting end of the adjusting rod to move in relation to a position. The position of the adjusting end of the adjusting rod can be adjusted conveniently and reliably through the position adjusting mechanism, so that the adjusting rod is driven to adjust the swinging range of the swing hinge point of the output rod, and the amplitude of the slider is adjusted.

As a specific embodiment of the position adjusting mechanism, the position adjusting mechanism includes a lead screw and a lead screw nut, and the lead screw nut is rotatably arranged on the adjusting end of the adjusting rod, the lead screw is connected with a driving unit, and the driving unit drives the lead screw to rotate, whereby driving the lead screw nut to axially slide along the lead screw. Specifically, the driving unit drives the lead screw to rotate, and then drives the lead screw nut to slide along the extension direction of the lead screw, thus changing the position of the adjusting end of the adjusting rod. This not only makes the whole adjustment process very convenient and accurate, but also provides a structural basis for being subsequently productized. Preferably, the driving unit is a driving motor or a manual knob, so as to achieve a more reasonable driving mode, optimize product cost, and provide support for product diversification.

As another specific embodiment of the position adjusting mechanism, the position adjusting mechanism may be a limit chute, the adjusting end of the adjusting rod is hinged with a slider slidably arranged in the limit chute, a slider fixing mechanism for fixing the slider to the limit chute is arranged on the slider, the slider fixing mechanism is a threaded knob and a fastening block in threaded fit with the threaded knob, and the slider is fixedly arranged on the limit chute when the threaded knob is tightened. The slider is limited to slide in the limit chute, and the position of the adjusting end of the adjusting rod is also adjusted in a slider sliding process. When the slider needs to be fixed at a specified position in the limit chute, only the threaded knob needs to be tightened, and the slider is fixedly arranged in the limit chute through the threaded knob, so that the position of the slider can be fixed and the required amplitude range of the piston can be obtained.

As another preferred structural form of the swing adjusting mechanism, the swing adjusting mechanism includes a limit baffle, the swinging range of the swing hinge point is set within the swinging range of the limit baffle, and the swinging range of the limit baffle is adjustable. The limit baffles form a relative swinging range, and the whole motion trajectory of the swing hinge point is limited within the swinging range. When necessary, only the swinging range of the limit baffle can be adjusted to obtain a new swinging range of the swing hinge point and adjust the amplitude of the slider.

As a further preferred embodiment of the above solution, preferably, the limit baffle has two baffles, the swing hinge point is arranged between the two baffles, and the distance between the two baffles is adjustable. The two baffles form a relative swinging range, and the swing hinge point is limited to move within the swinging range. When necessary, the swinging range of the swing hinge point can be adjusted only by adjusting the distance between the two baffles or the positions of the two baffles, and then the amplitude of the slider can be adjusted. In this solution, the positions of the baffles are flexibly arranged according to the actual arrangement needs, thereby saving the corresponding arrangement space. In addition, the swinging range of the limit baffle is directly adjusted to obtain the large swing adjustment range of the swing hinge point and further obtain the large amplitude adjustment range of the slider.

Based on the reciprocating drive mechanism of continuously variable amplitude, a corresponding fascia gun can also be obtained. The fascia gun includes a mounting chamber composed of a lower shell, an upper shell, a front cover and a rear cover, and a motor for driving a crank to rotate, and the slider is a piston slidably arranged in the piston hole of the front cover. In actual use, when the users need to adjust the vibration amplitude of the piston of the fascia gun, only the swing adjusting mechanism can be simply adjusted to conveniently adjust the swinging amplitude and swinging range of the output rod, so that the adjustment demand can be achieved. The fascia gun obtained based on the above reciprocating drive mechanism of continuously variable amplitude is greatly simplified in the structure of the amplitude adjustment system, and easy to achieve at the product level and popularize on a large scale in a later stage. In addition, the structure also makes the users adjust the amplitude more conveniently and accurately, which greatly improves the user experience.

As a further optimization of the above solution, preferably, the crank is an eccentric wheel, and the rotating input end of the eccentric wheel is fixedly connected with the output shaft of the motor. The eccentric wheel of the fascia gun is combined with the motor of the fascia gun, in a case that the eccentric distance of the eccentric wheel is not adjusted, the amplitude of the piston can be adjusted through the reciprocating drive mechanism of continuously variable amplitude.

In order to facilitate the mounting and fixation of the swing adjusting mechanism, a motor fixing stand can be optionally added, and the motor and the swing adjusting mechanism are arranged on the motor fixing stand. As a mechanism for adjusting the swinging amplitude and swinging range of the output rod, the swing adjusting mechanism will be subjected to high-frequency counter-acting force in an actual motion process. Therefore, the stability of the position of the swing adjusting mechanism is a design point that needs to be considered in an actual product. In view of the limited internal arrangement space of fascia gun products, the swing adjusting mechanism is arranged on the motor fixing stand, which makes good use of the stand originally used for fixing the motor, further saves the arrangement space and makes the internal arrangement more reasonable. In order to achieve the above stable arrangement, a mounting hole can be arranged on the swing adjusting mechanism, and the swing adjusting mechanism is arranged on the motor fixing stand through the mounting hole.

The invention has the beneficial effect that the existing fascia gun can achieve the effect of adjustable amplitude by directly adjusting the eccentric distance of the fascia gun, namely, increasing or decreasing the eccentric distance. The structural design is difficult to achieve in actual products. Adjustable eccentric distance brings the problems such as increased wear and vibration of related components, decreased stability of the overall structure, and high product production and manufacturing cost. Meanwhile, the relative position needs to be adjusted by changing the eccentric distance between the swinging arm and the eccentric wheel, if the relative position is changed in operation, the stability of the mechanism subjected to amplitude adjustment cannot be guaranteed, that is, it is difficult to guarantee the stability of the mechanism subjected to amplitude adjustment in actual use.

According to the invention, when the amplitude of a piston is adjusted, an eccentric distance of an eccentric wheel has no any change, therefore, the key to adjust the amplitude of the piston is to adjust the swinging amplitude of the swing hinge point of the output rod. Specifically, the output rod swings back and forth with the rotation of the eccentric wheel, and the change in the swinging amplitude and swinging range of the swing hinge point of the output rod will be transmitted to the piston through the swinging arm, which eventually leads to the change in the reciprocating amplitude of the piston. The additional swing adjusting mechanism is configured to directly control and adjust the swinging range of the swing hinge point, so as to directly and effectively adjust the reciprocating motion trajectory of the piston. Because the swinging amplitude of the swing hinge point and the swinging range thereof are adjusted, the internal relative connection will not cause the change in relative position in an adjustment process, and the operation stability of the mechanism subjected to amplitude adjustment is better. The invention is especially suitable for being widely used on fascia gun products.

### BRIEF DESCRIPTION OF DRAWINGS

FIG. 1 is a schematic diagram showing mechanical motion of a reciprocating drive mechanism of continuously variable amplitude.
FIG. 2 is a schematic diagram showing adjustment of a swinging range of a swing hinge point d of a reciprocating drive mechanism of continuously variable amplitude through an adjusting rod.
FIG. 3 is a schematic diagram showing definition of a swinging range of a swing hinge point d of a reciprocating drive mechanism of continuously variable amplitude by baffles at upper and lower sides.
FIG. 4 is a schematic diagram showing a maximum amplitude range of a corresponding piston when an adjusting rod of the invention is arranged at a bottom end of a limit chute.
FIG. 5 is a schematic diagram showing a minimum amplitude range of a corresponding piston when an adjusting rod of the invention is arranged at a top end of a limit chute.
FIG. 6 is a schematic diagram showing a piston at a maximum stroke position in a case that an adjusting rod of the invention is arranged at a position where the piston has a maximum amplitude range.
FIG. 7 is a schematic diagram showing a piston at a minimum stroke position in a case that an adjusting rod of the invention is arranged at a position where the piston has a maximum amplitude range.
FIG. 8 is a schematic diagram showing a piston at a maximum stroke position in a case that an adjusting rod of the invention is arranged at a position where the piston has a minimum amplitude range.
FIG. 9 is a schematic diagram showing a piston at a minimum stroke position in a case that an adjusting rod of the invention is arranged at a position where the piston has a minimum amplitude range.
FIG. 10 is a schematic diagram showing a piston at a maximum stroke position in a case that an adjusting rod of the invention is arranged at a position where the amplitude range of the piston is between the maximum amplitude range and the minimum amplitude range.
FIG. 11 is a schematic diagram showing a piston at a minimum stroke position in a case that an adjusting rod of the invention is arranged at a position where the amplitude range of the piston is between the maximum amplitude range and the minimum amplitude range.
FIG. 12 is a schematic diagram showing an adjusting rod of the invention being arranged at one of swing limit positions.
FIG. 13 is a schematic diagram showing the adjusting rod in FIG. 12 being swung to another of swing limit positions.
FIG. 14 is a schematic diagram of a piston amplitude calculation method.
FIG. 15 is a schematic diagram showing a position adjusting mechanism of a reciprocating drive mechanism of continuously variable amplitude being a lead screw and a lead screw nut.
FIG. 16 is a schematic diagram showing a change relationship between adjustment angles of a reciprocating drive mechanism of continuously variable amplitude in an embodiment.
FIG. 17 is an exploded view showing disassembled main components of a fascia gun according to the invention.
FIG. 18 is an exploded view showing a reciprocating drive mechanism of continuously variable amplitude according to the invention and surrounding components being disassembled.
FIG. 19 is a structural schematic diagram showing an embodiment of a reciprocating drive mechanism of continuously variable amplitude according to the invention.
FIG. 20 is a structural schematic diagram showing a limit chute of a reciprocating drive mechanism of continuously variable amplitude according to the invention.

Symbols are as follows: upper shell 1, reciprocating drive mechanism 2, front cover 3, lower shell 4, handle 5, rear cover 6, connecting rod 7, bearing 8, output rod 9, crank 91, limit baffle 92, slider 10, piston 101, adjusting rod 11, slider 12, threaded knob 13, fastening block 14, limit chute 15, eccentric wheel 16, motor fixing stand 17, motor 18, slider position 111 at a minimum piston amplitude range, slider position 112 at a maximum piston amplitude range, third slider position 113, first limit swing position f1 of output rod, second limit swing position f2 of output rod, piston amplitude range f, power source a, output hinge point c, swing hinge point d, adjusting hinge point e, rotation point g between adjusting rod and slider, lead screw 151, lead screw nut 152, driving unit 153, first cycloid length L1, first included angle θ, second included angle β, first spacing A, second spacing B.

### DESCRIPTION OF EMBODIMENTS

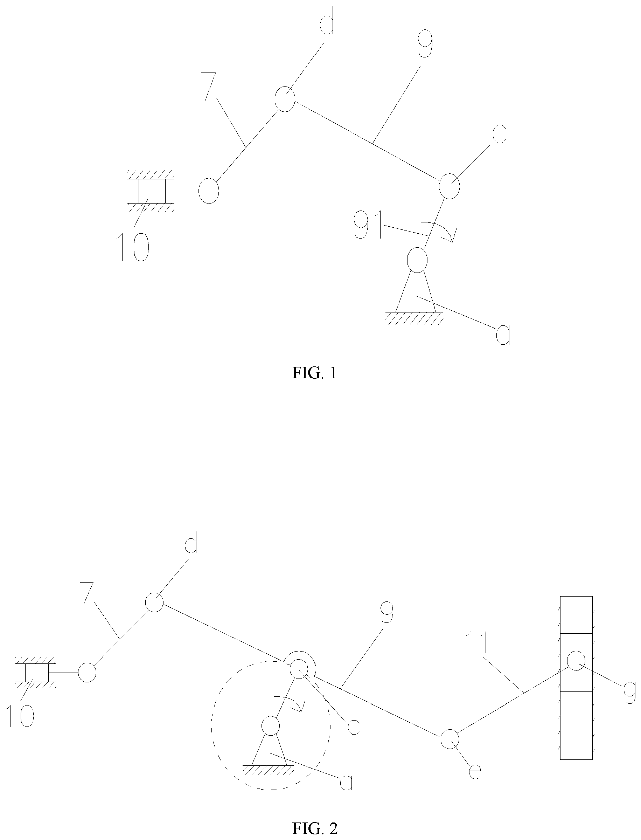

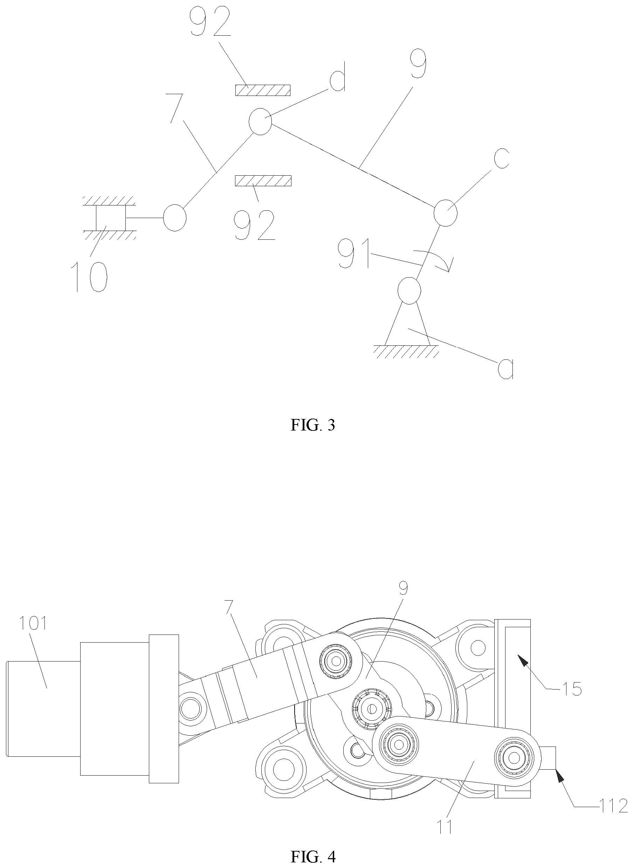

FIG. 1 - FIG. 3 show a structure of a reciprocating drive mechanism of continuously variable amplitude and a control principle thereof. FIG. 1 shows a slider-crank mechanism composed of a crank 91, an output rod 9, a connecting rod 7 and a slider 10 that are hinged in sequence. FIG. 3 is a schematic diagram showing a limit baffle 92 being additionally provided at a swing hinge point d. The swinging range of the swing hinge point d is within the swinging range of the limit baffle 92. FIG. 2 is a schematic diagram of an output rod 9 being a connecting rod. FIG. 2 is taken as an example, the output rod 9 swings while rotation is transferred to an output hinge point c through the power source a of rotation. However, the right end of the swinging output rod 9 is bound by the adjusting rod 11, and its swinging amplitude and swinging range will be inevitably different from those in a normal state. The left end of the output rod 9 is rotatably connected with the connecting rod 7, and the connecting rod 7 moves while the output rod 9 swings and drives the slider 10 to reciprocate. During adjustment, the right end of the adjusting rod 11 (namely, the relative position of the rotation point g between the adjusting rod and the slider) slides, to be specific, the swinging trajectory of the output rod 9 can be adjusted by the adjusting rod 11 and the adjusting hinge point e, so that the swinging amplitude of the swing hinge point d is adjusted and the amplitude of the slider 10 is further adjusted. In the structure, in a case that the eccentric distance is not adjusted, the swinging amplitude of the output rod 9 and the swinging range thereof are adjusted, the related adjusting structure is obviously optimized, and the product facilitates mass production. In addition, this adjustment mode can also be applied during the use of the fascia gun, which greatly improves the convenience of use and user experience.

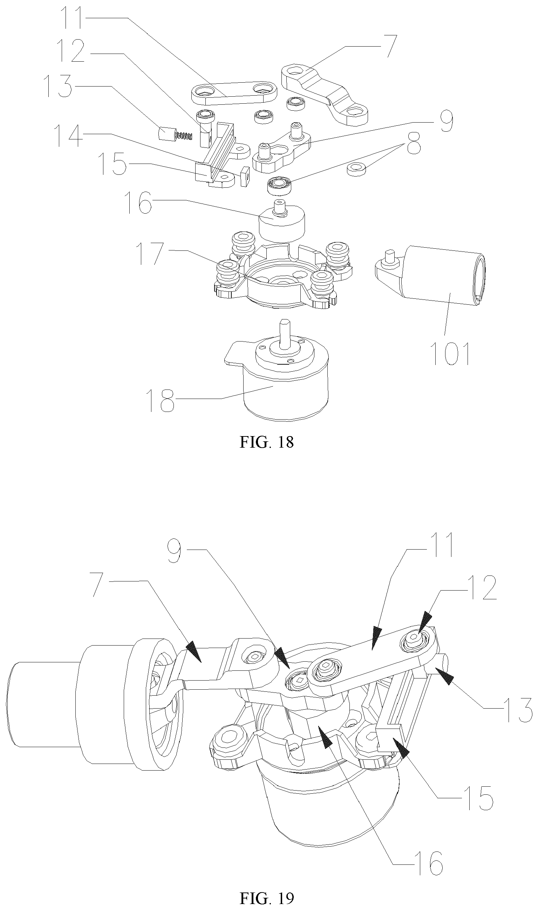

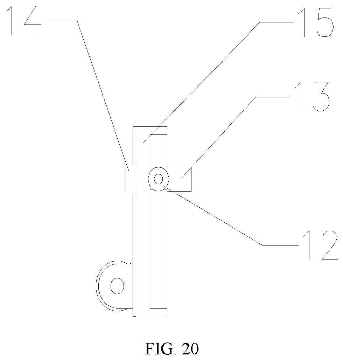

After the reciprocating drive mechanism of continuously variable amplitude is applied to a specific fascia gun product, its related structural schematic diagram is as shown in FIG. 4 to FIG. 20. Firstly, a mounting chamber is composed of a lower shell 4, an upper shell 1, a front cover 3 and a rear cover 6, the reciprocating drive mechanism 2 is arranged in the mounting chamber, and the piston 101 in the reciprocating drive mechanism 2 is slidably arranged in the piston hole of the front cover 3. As shown in FIG. 18, the motor 18 transmits the rotating power to the eccentric wheel 16 through the output shaft, and drives the eccentric wheel 16 to rotate. The rotating eccentric wheel 16 is rotatably connected with the output rod 9 through the output shaft of the eccentric wheel 1. The output rod 9 is rod-shaped, one end thereof is rotatably connected with the connecting rod 7, and the other end thereof is rotatably connected with the adjusting rod 11. After the above-mentioned infrastructure is connected, a specific structure as shown in FIG. 19 is obtained. During actual movement, the eccentric wheel 16 rotates with the output shaft of the motor 18, and the rotating eccentric wheel 16 drives the output rod 9 to swing accordingly. The amplitude of the piston 101 is constant when the position of the slider 12 at the adjusting end of the adjusting rod 11 is fixed. When the amplitude of the piston 101 needs to be adjusted, the threaded knob 13 is loosened and the position of the slider 12 is adjusted. As the position of the slider 12 is changed, the adjusting rod 11 will adjust the swinging state of the output rod 9 by adjusting the hinge point e, that is, it will adjust the swinging range of the swing hinge point d and then adjust the amplitude of the piston 101.

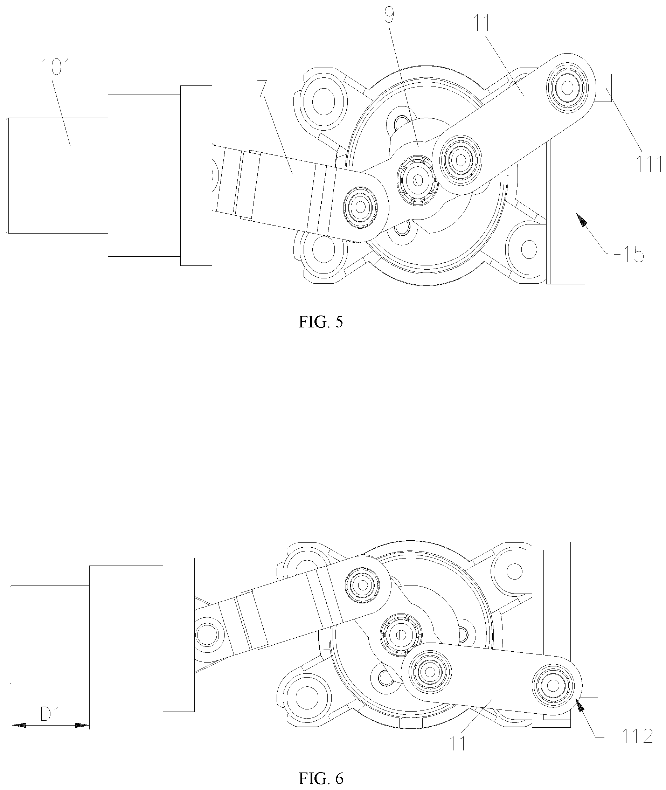

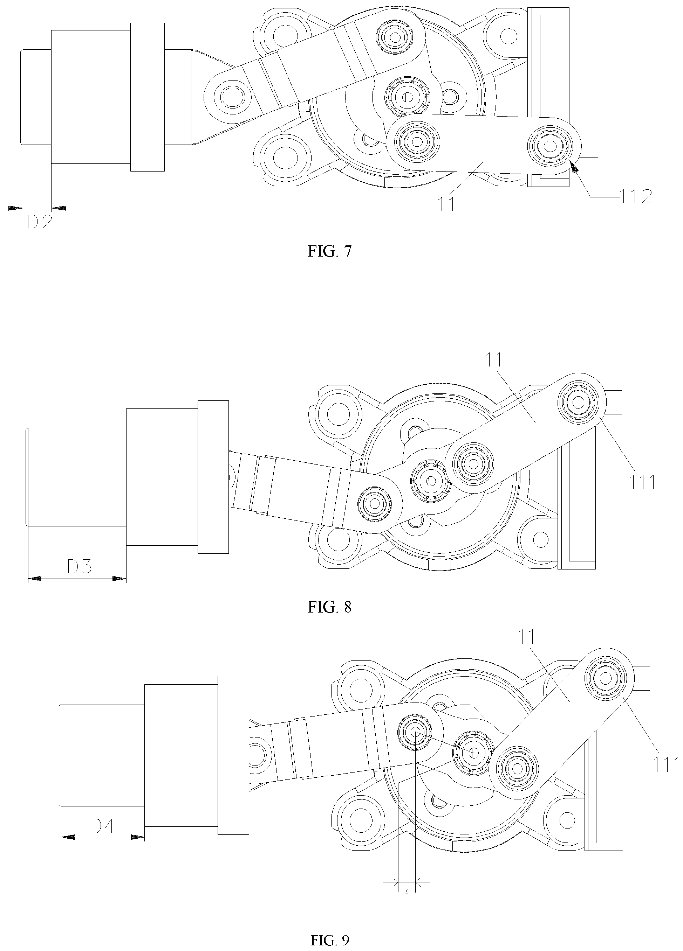

FIG. 6 to FIG. 11 are taken as an example; when the right end of the adjusting rod 11 is in the position as shown in FIG. 6, that is, when the right end of the adjusting rod 11 is in the position 112 of the slider, the piston 101 is within a maximum amplitude range. FIG. 6 shows the state of the piston 101 moving to the leftmost end, where a distance D1 between the left end of the piston 101 and a piston bush is 19.9mm. FIG. 7 shows the state of the piston 101 moving to the rightmost end, where a distance D2 between the left end of the piston 101 and a piston bush is 6.8mm, and therefore the amplitude stroke of the piston 101 is 19.9-6.8=13.1mm.

When the right end of the adjusting rod 11 is in the position as shown in FIG. 8 and FIG. 9, that is, when the right end of the adjusting rod 11 is in the position 111 of the slider, the piston 101 is within a minimum amplitude range. FIG. 8 shows the state of the piston 101 moving to the leftmost end, where a distance D3 between the left end of the piston 101 and a piston bush is 26mm. FIG. 9 shows the state of the piston 101 moving to the rightmost end, where a distance D4 between the left end of the piston 101 and a piston bush is 21.7mm, and therefore the amplitude stroke of the piston 101 is 26-21.7=4.3mm.

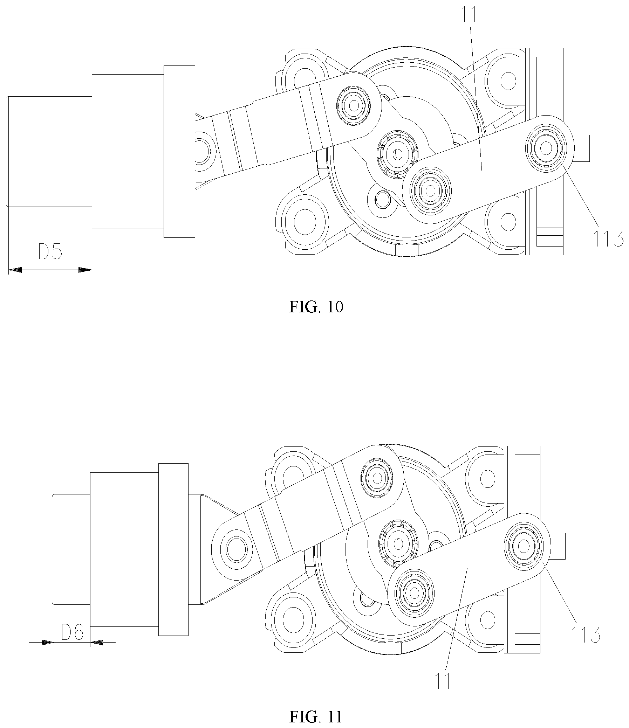

When the right end of the adjusting rod 11 is arranged between the above two limit positions, as shown in FIG. 10 and FIG. 11, that is, when the right end of the adjusting rod 11 is in the position 113 of the third slider, the amplitude range of the piston 101 is between the maximum range and the minimum range. FIG. 10 shows the state of the piston 101 moving to the leftmost end, where a distance D5 between the left end of the piston 101 and a piston bush is 26.3mm. FIG. 11 shows the state of the piston 101 moving to the rightmost end, where a distance D6 between the left end of the piston 101 and a piston bush is 16mm, and the amplitude stroke of the piston 101 is 26.3-16=10.3mm.

According to the above three positions, the amplitude stroke of the corresponding piston 101 can be adjusted in the range of 4.3mm to 13.1mm.

In addition, FIG. 16 also elaborates the relationship between angle adjustment and amplitude change in the above structure. In FIG. 16, point O is the center of the motor shaft, the rotation point g between the adjusting rod and the slider is the rotation center of the adjusting rod, the adjusting hinge point e is the rotation connection point between the output rod and the adjusting rod, the output hinge point c is the rotation connection point between the output rod and the eccentric wheel, and the swing hinge point d is the rotation connection point between the swinging arm and the output rod; an included angle between segment og and the abscissa axis is β, namely, a second included angle β, and an included angle between segment od and the abscissa axis is θ, namely, a first included angle θ. When the motor rotates with the eccentric wheel, because the swinging arm is limited by the adjusting rod, it can make a plane motion, that is, it swings back and forth, when the second included angle β is changed, the swinging arm is driven to swing within the corresponding swinging range with the first included angle θ, and the piston rod is driven to reciprocate within the corresponding amplitude F, this shows that the amplitude F increases with the decrease of the second included angle β. When the position of the rotation point g is changed and is corresponding to the second included angle β, a projection distance difference between the swing limit positions of the segment od in a horizontal direction is the current reciprocating distance F of the piston, and the included angle between by the segment od and the horizontal direction in a reciprocating swing process is changed in the range of θmax ~ θmin, that is, F=od*|Cosθmax-Cosθmin|, and od is L1. The amplitude F is adjusted by changing the position of the rotation point g (namely, changing the position of the second included angle β), this shows that the amplitude F increases with the decrease of the second included angle β, and the position of the rotation point g is continuously adjusted to realize the continuous adjustment of the corresponding amplitude F. The amplitude F is adjusted in the range of Fmax-Fmin. The second included angle β ranges from -20° - 30°; and the first included angle θ ranges from -20° - 90° (excluding 90°). A relationship among the second included angle β, the first included angle θ and the amplitude F can be explained by the following experimental data list and with reference to FIG. 16:

| SN | Second included angle β | Coordinate of point g (og*Cosβ, og*Sinβ) | First included angle θ | Coordinate of point d (od*Cosθ, od*Sinθ) | Amplitude F F=od*\|Cosθmax-Cosθmin\| |
|---|---|---|---|---|---|
| 1 | 27° | (36.8, 19) | θmin=-22° | Point min: (-12.68, 5.75) | 4.61 |
| | | | θmax=24° | Point max: (-17.29, -5.73) | |
| 2 | 16° | (36.8, 10.5) | θmin=16° | Point min: (-8.59, 12.83) | 8.63 |
| | | | θmax=56° | Point max: (-17.22, 4.79) | |
| 3 | -19° | (36.8, -12.94) | θmin=45° | Point min: (-0.47, 15.75) | 11.95 |
| | | | θmax=88° | Point max: (-12.42, 12.62) | |

It can be seen from the above test data and FIG. 16 that when the second included angle β gradually decreases in the range of 27° to -19°, the amplitude F gradually increases, and the adjustable range of the amplitude is 11.95-4.61=7.34mm. Furthermore, when the adjusting rod 11 is used to adjust the second included angle β in the range of -19° to 27°, the adjustable range of the amplitude of the piston is 7.34mm, that is, the amplitude is varied and adjusted in the range of 4.61mm to 11.95 mm.

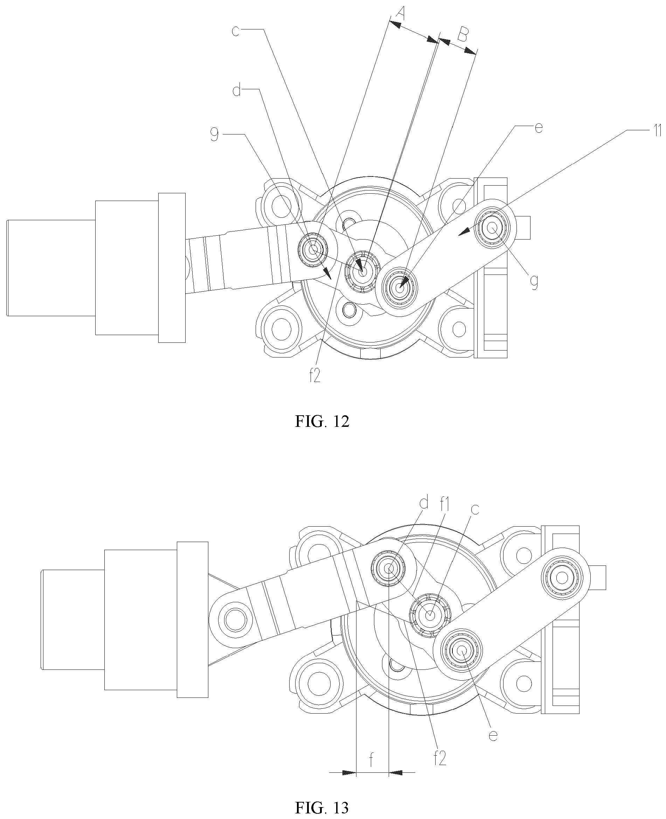

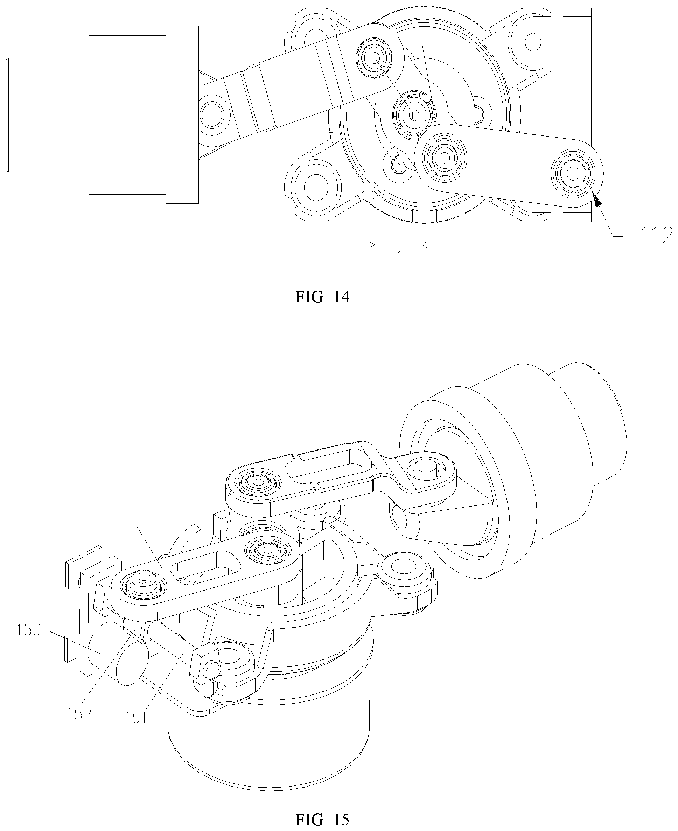

In FIG. 12, a spacing between the output hinge point c and the swing hinge point d is a first spacing A, and a spacing between the output hinge point c and the adjusting hinge point e is a second spacing B. When the output rod 9 is located in the second limit swing position f2 of the output rod as shown in FIG. 13, its axis is marked as f2. When the output rod 9 is in the first limit swing position f1 of the output rod as shown in FIG. 14, its axis is marked as f1. The position f2 and the position f1 are projected on the straight line where the piston 10 reciprocates, and a difference in projection lengths obtained through projection is marked as f, and is the amplitude f of the piston, namely, the amplitude stroke as mentioned above. The schematic diagram of the corresponding projection is also marked in FIG. 14.

FIG. 15 shows a state in which a position adjusting mechanism is a lead screw 151 and a lead screw nut 152. Compared with the adjusting way of the slider 12, the driving adjusting way of the lead screw 151 and the lead screw nut 152 can better realize the effect of the electrically driven continuous adjustment, so that the amplitude adjustment of the piston 101 is more accurate and convenient, and is more conducive to being used in fascia gun products. During actual use, the driving unit 153 drives the lead screw 151 to rotate, and relative rotation is made between the lead screw 151 under rotation and the lead screw nut 152, under the action of the thread between the lead screw and the lead screw nut 152, such relative rotation drives the lead screw nut 152 to slide along the axial direction of the lead screw 151, and the lead screw nut 152 is slidably mounted, specifically, a guide sliding rod passing through the lead screw nut or a chute structure for guiding and limiting the sliding of the lead screw nut 152 can be adopted, so that the spiral motion between the lead screw nut 152 and the driving lead screw 151 can be changed into the sliding of the lead screw nut 152, to adjust the position of the adjusting end of the adjusting rod 11.

In actual design, the arrangement position and structural form of the position adjusting mechanism only needs to ensure that the adjusting end of the adjusting rod 11 can be driven to move in relation to a position. Therefore, the position adjusting mechanism can be linear or curvilinear. In addition, a position relationship between the position adjusting mechanism and the output rod 9 is also based on a fact that the adjusting end of the adjusting rod 11 can be driven to move in relation to a position.

## Claims

1. A fascia gun, comprising a slider-crank mechanism and a mounting chamber, wherein:
the slider-crank mechanism is composed of a crank (91), an output rod (9), a connecting rod (7), a slider (10) that are hinged in sequence, and the fascia gun comprises a swing adjusting mechanism including an adjusting rod (11) with a swinging end and an adjusting end, and the swinging end of the adjusting rod (11) is hinged on the output rod (9), and the hinged position of the adjusting end of the adjusting rod (11) is adjustable,
the mounting chamber is composed of a lower shell (4), an upper shell (1), a front cover (3) and a rear cover (6), a motor (18) for driving a crank (91) to rotate, the slider (10) is a piston (101) slidably arranged in the piston hole of the front cover (3), the crank (91) is an eccentric wheel (16), and the rotating input end of the eccentric wheel (16) is fixedly connected with the output shaft of the motor (18).

2. The fascia gun according to claim 1, comprising a motor fixing stand (17), and the motor (18) and the swing adjusting mechanism are arranged on the motor fixing stand (17).

3. The fascia gun according to claim 1, wherein the connecting rod (7) is a swinging arm, and the slider (10) is a piston (101), a connecting line between the rotating connecting end of the output rod (9) and the swinging arm and the rotating input end of the eccentric wheel (16) is a first cycloid, and a connecting line between the adjusting end of the adjusting rod and the rotating input end of the eccentric wheel is a second cycloid; an included angle between the first cycloid and the reciprocating axis of the piston is a first included angle θ, and an included angle between the second cycloid and the reciprocating axis of the piston is a second included angle β; and the second included angle β is adjusted so that the swinging range of the first included angle θ is adjusted in linkage.

4. The fascia gun according to claim 3, wherein the reciprocating amplitude of the piston (101) satisfies the following relationship: F=L1* |Cosθmax-Cosθmin|; wherein F represents the reciprocating amplitude of the piston; L1 represents the length of the first cycloid, θmax represents the maximum swing angle of the first cycloid with respect to the second included angle β; and θmin represents the minimum swing angle of the first cycloid with respect to the second included angle β.

5. The fascia gun according to claim 4, wherein the second included angle β ranges from -20° to 30°, and the swing angle of the first included angle θ ranges from -20° to 90°.

6. The fascia gun according to claim 1, comprising an output hinge point (c) between the output rod (9) and the crank (91), an adjusting hinge point (e) between the output rod (9) and the swinging end of the adjusting rod (11), and a projection plane perpendicular to the rotating input end of the eccentric wheel (16), wherein the output hinge point (c), the adjusting hinge point (e) and the swing hinge point (d) are all projected onto the projection plane to obtain corresponding projection points, and the included angle of the connecting lines between any two projection points ranges from 0° to 360°.

7. The fascia gun according to any one of claims 1 to 6, further comprising a position adjusting mechanism, wherein the adjusting end of the adjusting rod (11) is hinged on the position adjusting mechanism, and the position adjusting mechanism drives the adjusting end of the adjusting rod (11) to move in relation to a position.

8. The fascia gun according to claim 7, wherein the position adjusting mechanism comprises a lead screw (151) and a lead screw nut (152), and the lead screw nut (152) is rotatably arranged on the adjusting end of the adjusting rod (11), the lead screw (151) is connected with a driving unit, and the driving unit (153) drives the lead screw (151) to rotate, whereby driving the lead screw nut (152) to axially slide along the lead screw (151).

9. The fascia gun according to claim 8, wherein the driving unit (153) is a driving motor or a manual knob.

10. The fascia gun according to claim 7, wherein the position adjusting mechanism is a limit chute (15), the adjusting end of the adjusting rod (11) is hinged with a slider (12) slidably arranged in the limit chute (15), a slider fixing mechanism for fixing the slider (12) to the limit chute (15) is arranged on the slider (12), the slider fixing mechanism is a threaded knob (13) and a fastening block (14) in threaded fit with the threaded knob (13), and the slider (12) is fixedly arranged on the limit chute (15) when the threaded knob (13) is tightened.

## Patentansprüche

1. Faszienpistole, umfassend einen Schieber-Kurbel-Mechanismus und eine Montagekammer, wobei:
der Schieber-Kurbel-Mechanismus aus einer Kurbel (91), einer Abtriebsstange (9), einer Verbindungsstange (7) und einem Schieber (10) besteht, die nacheinander gelenkig verbunden sind, und die Faszienpistole einen Schwenkeinstellmechanismus umfasst, der eine Einstellstange (11) mit einem Schwenkende und einem Einstellende umfasst, und das Schwenkende der Einstellstange (11) an der Abtriebsstange (9) angelenkt ist und die Anlenkposition des Einstellendes der Einstellstange (11) einstellbar ist,
die Montagekammer aus einer unteren Schale (4), einer oberen Schale (1), einer vorderen Abdeckung (3) und einer hinteren Abdeckung (6) sowie einem Motor (18) zum Antreiben einer Kurbel (91) zum Drehen besteht, der Schieber (10) ein Kolben (101) ist, der verschiebbar in dem Kolbenloch der vorderen Abdeckung (3) angeordnet ist, die Kurbel (91) ein Exzenterrad (16) ist und das rotierende Eingangsende des Exzenterrads (16) fest mit der Abtriebswelle des Motors (18) verbunden ist.

2. Faszienpistole nach Anspruch 1, umfassend einen Motorbefestigungsständer (17), wobei der Motor (18) und der Schwenkeinstellmechanismus auf dem Motorbefestigungsständer (17) angeordnet sind.

3. Faszienpistole nach Anspruch 1, wobei die Verbindungsstange (7) ein Schwenkarm und der Schieber (10) ein Kolben (101) ist, eine Verbindungslinie zwischen dem rotierenden Verbindungsende der Abtriebsstange (9) und dem Schwenkarm sowie dem rotierenden Eingangsende des Exzenterrads (16) eine erste Zykloide und eine Verbindungslinie zwischen dem Einstellende der Einstellstange und dem rotierenden Eingangsende des Exzenterrads eine zweite Zykloide ist; ein eingeschlossener Winkel zwischen der ersten Zykloide und der Hubachse des Kolbens ein erster eingeschlossener Winkel θ und ein eingeschlossener Winkel zwischen der zweiten Zykloide und der Hubachse des Kolbens ein zweiter eingeschlossener Winkel β ist; und der zweite eingeschlossene Winkel β so eingestellt wird, dass der Schwenkbereich des ersten eingeschlossenen Winkels θ im Gestänge eingestellt wird.

4. Faszienpistole nach Anspruch 3,
wobei die Hubamplitude des Kolbens (101) die folgende Beziehung erfüllt: F=L1* |Cosθmax-Cosθmin|; wobei F die Hubamplitude des Kolbens darstellt; L1 die Länge der ersten Zykloide darstellt, θmax den maximalen Schwenkwinkel der ersten Zykloide in Bezug auf den zweiten eingeschlossenen Winkel β darstellt; und θmin den minimalen Schwenkwinkel der ersten Zykloide in Bezug auf den zweiten eingeschlossenen Winkel β darstellt.

5. Faszienpistole nach Anspruch 4,
wobei der zweite eingeschlossene Winkel β im Bereich von -20° bis 30° und der Schwenkwinkel des ersten eingeschlossenen Winkels θ im Bereich von -20° bis 90° liegt.

6. Faszienpistole nach Anspruch 1, umfassend einen Abtriebsgelenkpunkt (c) zwischen der Abtriebsstange (9) und der Kurbel (91), einen Einstellgelenkpunkt (e) zwischen der Abtriebsstange (9) und dem Schwenkende der Einstellstange (11) und eine Projektionsebene senkrecht zum rotierenden Eingangsende des Exzenterrads (16), wobei der Abtriebsgelenkpunkt (c), der Einstellgelenkpunkt (e) und der Schwenkgelenkpunkt (d) alle auf die Projektionsebene projiziert werden, um entsprechende Projektionspunkte zu erhalten, und der eingeschlossene Winkel der Verbindungslinien zwischen zwei beliebigen Projektionspunkten im Bereich von 0° bis 360° liegt.

7. Faszienpistole nach einem der Ansprüche 1 bis 6, umfassend ferner einen Positionseinstellmechanismus, wobei das Einstellende der Einstellstange (11) an dem Positionseinstellmechanismus angelenkt ist und der Positionseinstellmechanismus das Einstellende der Einstellstange (11) antreibt, sich relativ zu einer Position zu bewegen.

8. Faszienpistole nach Anspruch 7, wobei der Positionseinstellmechanismus eine Leitspindel (151) und eine Leitspindelmutter (152) umfasst und die Leitspindelmutter (152) drehbar am Einstellende der Einstellstange (11) angeordnet ist, die Leitspindel (151) mit einer Antriebseinheit verbunden ist und die Antriebseinheit (153) die Leitspindel (151) zum Drehen antreibt, wodurch die Leitspindelmutter (152) angetrieben wird, axial entlang der Leitspindel (151) zu gleiten.

9. Faszienpistole nach Anspruch 8, wobei die Antriebseinheit (153) ein Antriebsmotor oder ein manueller Knopf ist.

10. Faszienpistole nach Anspruch 7, wobei der Positionseinstellmechanismus eine Begrenzungsrutsche (15) ist, das Einstellende der Einstellstange (11) gelenkig mit einem in der Begrenzungsrutsche (15) verschiebbar angeordneten Schieber (12) verbunden ist, ein Schieberbefestigungsmechanismus zum Befestigen des Schiebers (12) an der Begrenzungsrutsche (15) am Schieber (12) angeordnet ist, der Schieberbefestigungsmechanismus ein Gewindeknopf (13) und ein Befestigungsblock (14) ist, der mit dem Gewindeknopf (13) in Gewindepassung steht, und der Schieber (12) fest an der Begrenzungsrutsche (15) angeordnet ist, wenn der Gewindeknopf (13) festgezogen wird.

## Revendications

1. Pistolet à fascia, comprenant un mécanisme bielle-manivelle et une chambre de montage, dans lequel :
le mécanisme bielle-manivelle est composé d'une manivelle (91), d'une tige de sortie (9), d'une bielle (7) et d'un coulisseau (10) articulés en séquence, et le pistolet à fascia comprend un mécanisme de réglage d'oscillation comportant une tige de réglage (11) dotée d'une extrémité oscillante et d'une extrémité de réglage, l'extrémité oscillante de la tige de réglage (11) étant articulée sur la tige de sortie (9), et la position d'articulation de l'extrémité de réglage de la tige de réglage (11) étant réglable,
la chambre de montage est composée d'une coque inférieure (4), d'une coque supérieure (1), d'un couvercle avant (3) et d'un couvercle arrière (6), un moteur (18) destiné à entraîner la manivelle (91) en rotation, le coulisseau (10) étant un piston (101) agencé de manière coulissante dans le trou de piston du couvercle avant (3), la manivelle (91) étant une roue excentrique (16), et l'extrémité d'entrée de rotation de la roue excentrique (16) étant reliée de manière fixe à l'arbre de sortie du moteur (18).

2. Pistolet à fascia selon la revendication 1, comprenant un support de fixation de moteur (17), le moteur (18) et le mécanisme de réglage d'oscillation étant agencés sur le support de fixation de moteur (17).

3. Pistolet à fascia selon la revendication 1, dans lequel la bielle (7) est un bras oscillant, et le coulisseau (10) est un piston (101), une ligne de connexion entre l'extrémité de connexion rotative de la tige de sortie (9) et le bras oscillant ainsi que l'extrémité d'entrée de rotation de la roue excentrique (16) constitue une première cycloïde, et une ligne de connexion entre l'extrémité de réglage de la tige de réglage et l'extrémité d'entrée de rotation de la roue excentrique constitue une seconde cycloïde ; un angle inclus entre la première cycloïde et l'axe de mouvement alternatif du piston est un premier angle inclus θ, et un angle inclus entre la seconde cycloïde et l'axe de mouvement alternatif du piston est un second angle inclus β ; et le second angle inclus β est réglé de telle sorte que la plage d'oscillation du premier angle inclus θ soit réglée par couplage.

4. Pistolet à fascia selon la revendication 3,
dans lequel l'amplitude de mouvement alternatif du piston (101) répond à la relation suivante : F = L1 * |cosθmax - cosθmin| ; où F représente l'amplitude de mouvement alternatif du piston ; L1 représente la longueur de la première cycloïde, θmax représente l'angle d'oscillation maximal de la première cycloïde par rapport au second angle inclus β ; et θmin représente l'angle d'oscillation minimal de la première cycloïde par rapport au second angle inclus β.

5. Pistolet à fascia selon la revendication 4,
dans lequel le second angle inclus β est compris entre -20° et 30°, et l'angle d'oscillation du premier angle inclus θ est compris entre -20° et 90°.

6. Pistolet à fascia selon la revendication 1, comprenant un point d'articulation de sortie (c) entre la tige de sortie (9) et la manivelle (91), un point d'articulation de réglage (e) entre la tige de sortie (9) et l'extrémité oscillante de la tige de réglage (11), et un plan de projection perpendiculaire à l'extrémité d'entrée de rotation de la roue excentrique (16), dans lequel le point d'articulation de sortie (c), le point d'articulation de réglage (e) et le point d'articulation d'oscillation (d) sont tous projetés sur le plan de projection pour obtenir des points de projection correspondants, et l'angle inclus des lignes de connexion entre deux points de projection quelconques est compris entre 0° et 360°.

7. Pistolet à fascia selon l'une quelconque des revendications 1 à 6, comprenant en outre un mécanisme de réglage de position, dans lequel l'extrémité de réglage de la tige de réglage (11) est articulée sur le mécanisme de réglage de position, et le mécanisme de réglage de position entraîne l'extrémité de réglage de la tige de réglage (11) à se déplacer par rapport à une position.

8. Pistolet à fascia selon la revendication 7, dans lequel le mécanisme de réglage de position comprend une vis-mère (151) et un écrou de vis-mère (152), l'écrou de vis-mère (152) étant monté rotatif sur l'extrémité de réglage de la tige de réglage (11), la vis-mère (151) étant reliée à une unité d'entraînement, et l'unité d'entraînement (153) entraînant la vis-mère (151) en rotation, permettant ainsi d'entraîner l'écrou de vis-mère (152) pour qu'il coulisse axialement le long de la vis-mère (151).

9. Pistolet à fascia selon la revendication 8, dans lequel l'unité d'entraînement (153) est un moteur d'entraînement ou un bouton manuel.

10. Pistolet à fascia selon la revendication 7, dans lequel le mécanisme de réglage de position est une glissière de limitation (15), l'extrémité de réglage de la tige de réglage (11) étant articulée avec un coulisseau (12) agencé de manière coulissante dans la glissière de limitation (15), un mécanisme de fixation de coulisseau destiné à fixer le coulisseau (12) à la glissière de limitation (15) étant agencé sur le coulisseau (12), le mécanisme de fixation de coulisseau étant composé d'un bouton fileté (13) et d'un bloc de serrage (14) en prise filetée avec le bouton fileté (13), et le coulisseau (12) étant fixé de manière rigide sur la glissière de limitation (15) lorsque le bouton fileté (13) est serré.
